# EUROPEAN PATENT APPLICATION

(11) **EP 2 031 384 A1**
(43) Date of publication of application: **04.03.2009**
(21) Application number: 07744771.2
(22) Date of filing: 06.06.2007
(51) Int. Cl.: G01N 29/02

(54) **SENSOR FOR DETECTING SUBSTANCE IN LIQUID**

(30) Priority: 16.06.2006 JP 2006167302
(71) Applicant: Murata Manufacturing Co. Ltd., Nagaokakyo-shi, Kyoto 617-8555 (JP)
(72) Inventor: OKAGUCHI, Kenjiro, Nagaokakyo-shi, Kyoto 617-8555 (JP); HADA, Takuo, Nagaokakyo-shi, Kyoto 617-8555 (JP); KADOTA, Michio, Nagaokakyo-shi, Kyoto 617-8555 (JP)
(74) Representative: Lloyd, Patrick Alexander Desmond
(86) International application number: PCT/JP2007/061428
(87) International publication number: WO 2007/145108

(57) **Abstract**

Obtained is a sensor for detecting a substance in liquid, the sensor being capable of measuring a substance to be detected in liquid with higher sensitivity and reliability.

A sensor 1 for detecting a substance in liquid includes a sensing circuit 2 including a sensing surface-acoustic-wave (SAW) element 4 in which a reaction film to react with a substance in liquid is disposed, a reference circuit 3 including a reference SAW element 6 including an IDT and having no reaction film, a first signal source 8 driving the sensing circuit 2, a second signal source 9 driving the reference circuit 3 and being disposed independently of the first signal source, and a differential circuit 10 outputting a differential output between an output of the sensing circuit 2 and an output of the reference circuit 3. The frequency of a first frequency signal output from the first signal source 8 is different from the frequency of a second frequency signal output from the second signal source 9, thereby making a driving frequency for the sensing SAW element 4 and a driving frequency for the reference SAW element 6 the same or different.

## Description

### Technical Field

The present invention relates to sensors for detecting a substance in liquid using a surface-acoustic-wave element (SAW element), and more specifically, to a sensor for detecting a substance in liquid, the sensor including a sensing SAW element and a reference SAW element.

### Background Art

Various sensors have been developed for detecting a substance to be detected (detection-target substance) in liquid, for example, a protein. For example, Patent Document 1 listed below discloses a sensor for detecting a substance in liquid using a surface acoustic wave element.

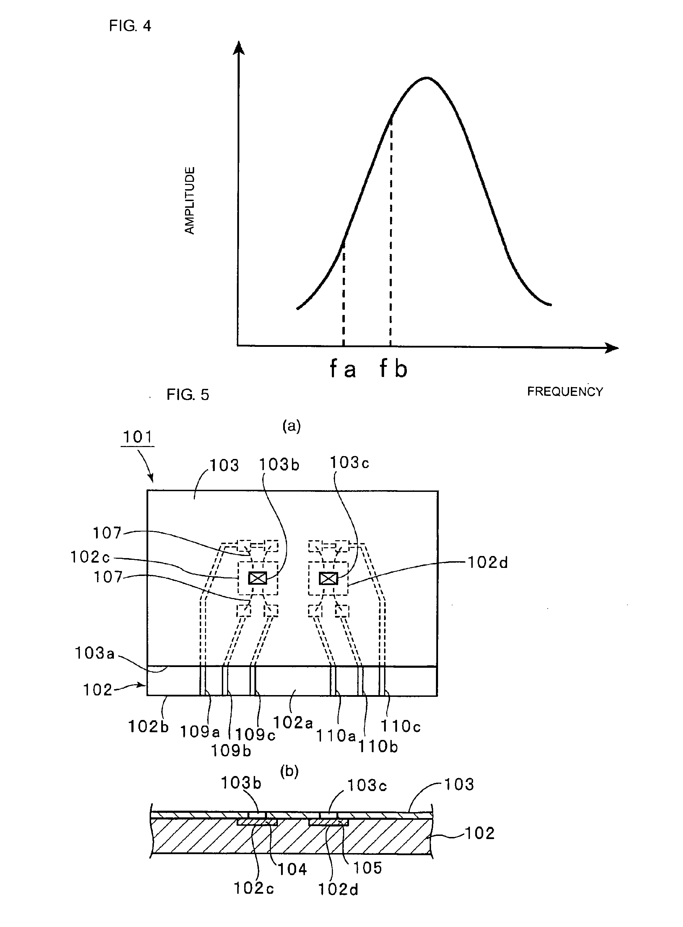

Fig. 5(a) is a plan view for describing a sensor for detecting a substance in liquid described in Patent Document 1, and Fig. 5(b) is a front cross-sectional view that illustrates a main portion thereof.

A sensor 101 for detecting a substance in liquid includes a base substrate 102. The base substrate 102 includes an upper surface 102a in which recesses 102c and 102d are formed at positions separated from a first end 102b. A sensing SAW element 104 and a reference SAW element 105 are disposed in the recesses 102c and 102d, respectively. A resin layer 103 having holes 103b and 103c facing the recesses 102c and 102d, respectively, is laminated on the base substrate 102.

The sensing SAW element 104 includes a piezoelectric substrate, an interdigital transducer (IDT) formed on the piezoelectric substrate, and a reaction film formed so as to cover the IDT. The reaction film is made of a material that can react with a detection-target substance in liquid as a sample and couple to the detection-target substance. The reference SAW element 105 has a configuration in which an IDT is formed on a piezoelectric substrate. The reference SAW element 105 has no reaction film.

In use, at least the portions in which the holes 103b and 103c are disposed are placed in liquid, and as a result, the reaction film of the sensing SAW element 104 reacts with and couples to a detection-target substance. Accordingly, in the sensing SAW element 104, a mass on the portion in which the IDT is disposed is increased by the coupling to the detection-target substance. In contrast, in the reference SAW element 105, because the reaction film to react with the detection-target substance is not disposed, there is no increase of mass caused by the coupling to the detection-target substance.

In the sensor 101 for detecting a substance in liquid described in Patent Document 1, a change in the speed of sound of a surface-acoustic wave caused by an addition of mass in the sensing SAW element 104 is detected as a change in electrical signal. In this case, it is said that the detection-target substance is detectable with high precision by determination of the difference between an output from the sensing SAW element and an output from the reference SAW element.

A similar sensor for detecting a substance in liquid is also disclosed in Patent Document 2.
Patent Document 1: W02006/027893A1
Patent Document 2: W02006/027945A1

### Disclosure of Invention

As described above, the sensor 101 for detecting a substance in liquid detects the presence or absence, the density, or the like, of a protein in liquid by use of the difference between an output signal from the sensing SAW element 104 and that from the reference SAW element 105. Specifically, the difference between an oscillation frequency of an oscillation circuit containing the sensing SAW element and that of an oscillation circuit containing the reference SAW element is determined to detect the presence or absence or the density of the detection-target substance.

It is greatly desired for the sensor 101 for detecting a substance in liquid that, when the detection-target substance is not present, the characteristic of the sensing SAW element 104 and that of the reference SAW element 105 be the same or approximately equal.

However, when the detection-target substance comes into contact with the SAW elements 104 and 105, the difference between the oscillation frequency of the oscillation circuit containing the sensing SAW element 104 and that containing the reference SAW element 105 may be small. In such a case, both oscillations may be electromagnetically coupled, and both the oscillation frequencies may be exactly the same. For this reason, the difference in frequency between the oscillation circuit containing reference SAW element and the oscillation circuit containing the sensing SAW element is zero, so it is difficult to detect the detection-target substance in liquid reliably with high precision.

It is an object of the present invention to overcome the above-described drawbacks in the related art and to provide a sensor for detecting a substance in liquid, the sensor being capable of detecting a detection-target substance in liquid with higher sensitivity.

According to the present invention, provided is a sensor for detecting a substance in liquid. The sensor includes a sensing circuit, a reference circuit, a first signal source, a second signal source, and a differential circuit. The sensing circuit includes a sensing surface-acoustic-wave (SAW) element. The sensing SAW element includes a piezoelectric substrate, an interdigital transducer (IDT) disposed on the piezoelectric substrate, and a sensing portion in which a reaction film is formed so as to cover the IDT and to react with a detection-target substance in liquid. The reference circuit includes a reference SAW element. The reference SAW element includes a piezoelectric substrate and an IDT disposed on the piezoelectric substrate and having no reaction film formed so as to cover the IDT. The first signal source drives the sensing circuit. The second signal source drives the reference circuit and is disposed independently of the first signal source. The differential circuit is connected to the sensing circuit and the reference circuit and outputs a differential output between an output of the sensing circuit and an output of the reference circuit. The first signal source is configured to output a first frequency signal, and the second signal source is configured to output a second frequency signal having a frequency different from a frequency of the first frequency signal, thereby making a driving frequency for the sensing SAW element and a driving frequency for the reference SAW element different.

In the sensor for detecting a substance in liquid according to the present invention, the first and second frequency signals may preferably be selected so as to satisfy dP ≥ 0, where dP=Pr-Ps, Ps is an output signal of the sensing circuit, Pr is an output signal of the reference circuit, and dP is an output signal of the differential circuit. In this case, because the first and second frequency signals are selected so as to satisfy dP ≥ 0, the output of the sensing circuit including the sensing SAW element based on the amplitude of the SAW element caused by the reaction of the detection-target substance in liquid reacts with the reaction film and the addition of mass on the sensing SAW element is low. Accordingly, the magnitude of the output dP from the differential circuit enables the presence or absence and the density of the detection-target substance in liquid to be detected with higher precision and reliability.

Preferably, a 30° to 40° rotated Y-plate X-propagation lithium tantalate (LiTaO₃) substrate may be used as the piezoelectric substrate. This enables the detection-target substance in liquid to be detected with higher sensitivity and reliability.

Each of the sensing SAW element and the reference SAW element can be formed from a SAW element that uses various surface-acoustic waves. Preferably, a SAW element that uses surface acoustic waves composed principally of shear-horizontal (SH) waves may be used. In this case, each of the sensing SAW element and the reference SAW element can be formed as an end-surface-reflection surface-acoustic-wave element. Accordingly, the sensing SAW element and the reference SAW element can be smaller in size.

### (Advantages)

In the present invention, the sensing SAW element and the reference SAW element are driven by first and second frequency signals, respectively, being the same or different. The differential amplifying circuit outputs a differential output between the output of the sensing circuit including the sensing SAW element based on the amplitude level of the sensing SAW element and the output of the reference circuit including the reference SAW element based on the amplitude of the reference SAW element. Accordingly, the differential output enables the presence or absence or the density of the detection-target substance to be detected on the basis of a decrease in the amplitude level based on a decrease in frequency caused by an increased mass in the sensing SAW element occurring when the detection-target substance is coupled. That is, without an oscillation circuit, the detection-target substance is detected on the basis of the difference in amplitude between the sensing SAW element and the reference SAW element. Accordingly, a difference in driving and a decrease in accuracy of measurement do not occur. Thus, the detection-target substance can be detected with high precision and high sensitivity.

### Brief Description of Drawings

[Fig. 1] Fig. 1 is a block diagram for describing a sensor for detecting a substance in liquid according to a first embodiment of the present invention.
[Fig. 2] Fig. 2 is a cross-sectional view that schematically illustrates a configuration of a sensing SAW element.
[Fig. 3] Fig. 3 is a cross-sectional view that schematically illustrates a configuration of a reference SAW element.
[Fig. 4] Fig. 4 illustrates a frequency characteristic of an output of a SAW element.
[Fig. 5] Fig. 5(a) is a plan view that illustrates one example of a traditional sensor for detecting a substance in liquid, and Fig. 5(b) is a front cross-sectional view that illustrates a main portion thereof.

### Reference Numerals

- 1: sensor for detecting substance in liquid
- 2: sensing circuit
- 3: reference circuit
- 4: sensing SAW element
- 4a: piezoelectric substrate
- 4b: IDT
- 4c: reaction film
- 5: first output-level detecting circuit
- 6: reference SAW element
- 7: second output-level detecting circuit
- 8: first signal source
- 9: second signal source

### Best Mode for Carrying Out the Invention

The present invention will be clarified below by description of specific embodiments of the present invention with reference to the drawings.

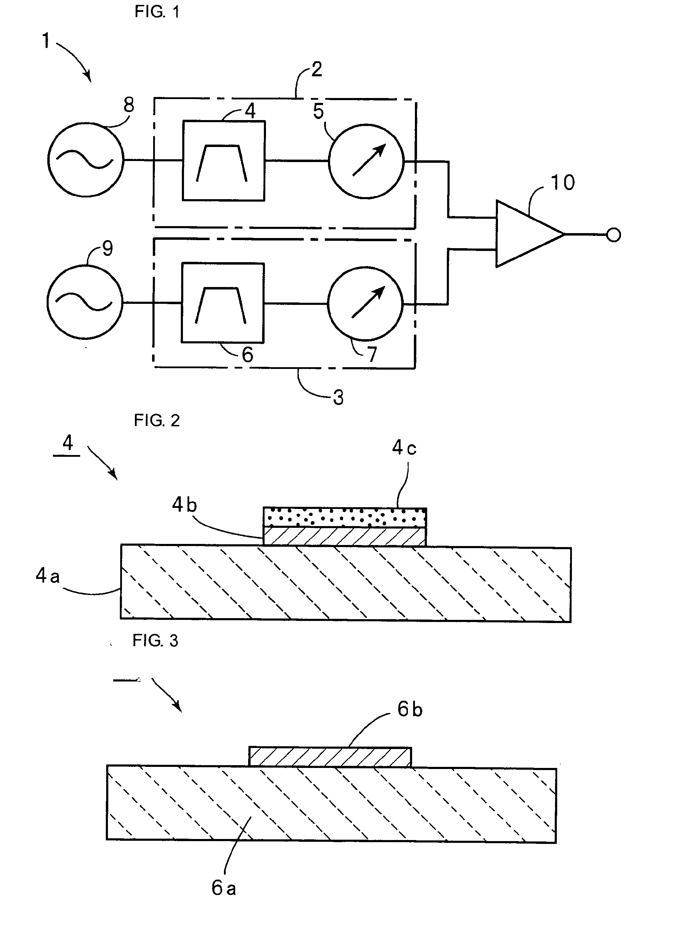

Fig. 1 is a block diagram that illustrates a circuit configuration of a sensor for detecting a substance in liquid according to one embodiment of the present invention.

The sensor for detecting a substance in liquid according to the present invention will be described.

As illustrated in Fig. 1, the sensor 1 for detecting a substance in liquid includes a sensing circuit 2 and a reference circuit 3. The sensing circuit 2 has a configuration in which a sensing SAW element 4 is connected to a first output-level detecting circuit 5. The reference circuit 3 has a structure in which a reference SAW element 6 is connected to a second output-level detecting circuit 7.

Each of the sensing SAW element 4 and the reference SAW element 6 can be constructed using a SAW element in which an IDT is formed on a piezoelectric substrate, for example. As schematically illustrated in Fig. 2, in the sensing SAW element 4, an IDT 4b is formed on the top surface of a piezoelectric substrate 4a, and a reaction film 4c is formed so as to cover the IDT 4b. In the reference SAW element 6, as schematically illustrated in Fig. 3, an IDT 6b is formed on a piezoelectric substrate 6a. The reference SAW element has no reaction film 4c.

When the above sensing SAW element 4 is made to come into contact with liquid containing a detection-target substance, the reaction film 4c reacts with the detection-target substance, and the protein, for example, is coupled to the reaction film 4c. As a result, a mass on the IDT 4b is increased. By use of this change of the increased mass, the presence or absence or the density of the detection-target substance can be measured.

The above reaction film 4c is made of a suitable material that can react with a detection-target substance in liquid. For example, to measure an antigen or antibody in liquid, a film in which the antigen or antibody is immobilized can be used as the reaction film. In this case, the antigen or antibody in liquid is coupled to the antigen or antibody immobilized in the reaction film, and an immune complex is thus formed. This formation varies a mass on the portion in which the IDT is disposed. Such a reaction film made of a suitable material that can react with a detection-target substance in liquid and vary a mass on the portion in which the IDT is disposed can be selected as the reaction film 12c depending on the nature of the detection-target substance. The detection-target substance is not limited to an antigen and antibody and can be various biochemical materials, including a protein. Also, it is not limited to such biochemical materials. Various elements and inorganic compounds can be a target material to be detected. That is, the sensor for detecting a substance in liquid according to the present invention is suitably used as a biosensor for detecting a biogenic substance, such as an antigen, antibody, or protein. However, it is not limited to the biosensor. It can be used for detecting various substances, for example, can be used as a gas sensor.

To remove noise caused by a change in temperature, the reference circuit 3 including the reference SAW element 6 is also used. That is, background noise and noise caused by a change in temperature are removed by subtraction of a result obtained in the reference circuit 3 from a result obtained in the sensing circuit 2. Accordingly, the presence or absence and the density of a detection-target substance are detectable accurately.

The first output-level detecting circuit 5 and the second output-level detecting circuit 7 detect an amplitude level as an output of the sensing SAW element 4 and that as an output of the reference SAW element 6. The sensing SAW element 4 is connected to a first signal source 8. That is, the first signal source 8 is connected to the sensing SAW element 4 such that a first frequency signal is supplied from the first signal source 8 to the sensing SAW element 4. The sensing SAW element 4 is driven by the first frequency signal.

The reference SAW element 6 is connected to a second signal source 9. The second signal source 9 outputs a second frequency signal having a frequency different from that of the first frequency signal. The reference SAW element 6 is driven by the second frequency signal.

The output terminal of the first output-level detecting circuit 5 is connected to a first input terminal of a differential amplifier 10. The output terminal of the second output-level detecting circuit 7 is connected to a second input terminal of the differential amplifier 10. The differential amplifier 10 detects a difference between an output of the first output-level detecting circuit 5 and that of the second output-level detecting circuit 7, i.e., dp = Pr - Ps, where Ps is the level of an output of the first output-level detecting circuit 5, and Pr is the level of an output of the second output-level detecting circuit 7. That is, in the present embodiment, the first signal source 8 driving the sensing circuit 2 and the second signal source 9 driving the reference circuit 3 are disposed independently. To make a driving frequency for the sensing SAW element 4 and that for the reference SAW element 6 different, the first frequency signal output from the first signal source 8 and the second frequency signal output from the second signal source 9 are made different.

In the present embodiment, the sensing SAW element 4 and the reference SAW element 6 are directly driven by the first signal source 8 and the second signal source 9, respectively, outputting predetermined frequency signals. That is, because there is no oscillation circuit, a malfunction and a decrease in sensitivity caused by coupling of oscillations are not present. Accordingly, a substance in liquid is detectable with higher sensitivity and higher precision.

A principle of measurement according to the present embodiment will now be described. When a frequency of a specific signal is input to a SAW element, the output has a frequency distribution, as illustrated in Fig. 4. When a detection-target substance is coupled to the reaction film in the sensing SAW element by reaction, a mass on the portion in which the IDT is disposed in the sensing SAW element is increased. This change of the increased mass varies the speed of sound and varies the frequency in the sensing SAW element. As a result, as illustrated in Fig. 4, the amplitude level is changed by the change in the frequency. This change of the amplitude level, i.e., the change of the amplitude level as the output of the sensing SAW element enables the presence or absence or the density of the detection-target substance to be detected. In addition, also in the present embodiment, where the amplitude level as the output of the reference SAW element is Pr and the output as the amplitude of the sensing SAW element is Ps, the differential amplifier 10 outputs the differential output dP = Pr - Ps. By use of the value of the dP, the presence or absence or the density of the detection-target substance in liquid are detectable with high precision.

In the present embodiment, the first frequency signal and the second frequency signal are different, as described above. This will be described with reference to Fig. 4. As illustrated in Fig. 4, the amplitude level at a frequency fa and the amplitude level at a frequency fb are different.

That is, it is assumed that the frequency fa is selected as the first frequency signal output from the first signal source 8, and the frequency fb is selected as the second frequency signal output from the second signal source 9, for example. In this case, the sensing SAW element 4 is driven by the first frequency signal at the frequency fa, whereas the reference SAW element 6 is driven by the second frequency signal at the frequency fb.

Accordingly, the level of the output detected by the first output-level detecting circuit 5 and that by the second output-level detecting circuit 7 are different in an initial state. In the present embodiment, the first frequency signal and the second frequency signal are selected such that the differential output dP ≥ 0 is satisfied. Accordingly, the first frequency signal and the second frequency signal are selected such that, when a detection-target substance in liquid is coupled to the reaction film and the mass is increased, the amplitude of the sensing SAW element 4 is reduced.

In other words, because the frequency of the first frequency signal is positioned lower than a frequency at which the amplitude is a maximum value in Fig. 4, when the detection-target substance in liquid is coupled to the reaction film and the mass is increased, dP can be increased with reliability. Thus, the detection-target substance is detectable with high sensitivity.

It is not necessarily required to select the first frequency signal and the second frequency signal such that dP ≥ 0 is satisfied. That is, by selecting the first and second frequency signals such that dP ≥ 0 is satisfied by making the difference in frequency between the first and second frequency signals different, the substance in liquid is detectable with high precision.

In the foregoing, the first output-level detecting circuit 5 and the second output-level detecting circuit 7 are used. However, neither the first output-level detecting circuit 5 nor the second output-level detecting circuit 7 may be disposed. The output of the sensing SAW element 4 and that of reference SAW element 6 may be immediately supplied to the differential amplifier 10.

The piezoelectric substrate for a SAW element used in the above embodiment is not limited to a particular one. For example, a suitable piezoelectric single crystal, such as a LiTaO₃ substrate, or a lithium niobate (LiNbO₃) substrate, or piezoelectric ceramic can be used. Preferably, a 30° to 40° rotated Y-plate X-propagation LiTaO₃ substrate may be used. In this case, the detection-target substance in liquid is detectable with high sensitivity.

The SAW elements 4 and 6 used in the above embodiment are not limited to a particular one. SAW elements that utilize various kinds of surface-acoustic wave, such as Rayleigh waves or shear-horizontal (SH) waves, can be used. If surface-acoustic waves composed principally of SH waves are used, an end-surface-reflection SAW device can be constructed. As a result, the sensor for detecting a substance in liquid can be smaller in size.

Each of the above SAW elements can also be a SAW resonator or a SAW filter.

## Claims

1. A sensor for detecting a substance in liquid, the sensor comprising:
a sensing circuit including a sensing surface-acoustic-wave (SAW) element, the sensing SAW element including a piezoelectric substrate, an interdigital transducer (IDT) disposed on the piezoelectric substrate, and a sensing portion in which a reaction film is formed so as to cover the IDT and to react with a detection-target substance in liquid;
a reference circuit including a reference SAW element, the reference SAW element including a piezoelectric substrate and an IDT disposed on the piezoelectric substrate and having no reaction film formed so as to cover the IDT;
a first signal source driving the sensing circuit;
a second signal source driving the reference circuit and being disposed independently of the first signal source; and
a differential circuit being connected to the sensing circuit and the reference circuit and outputting a differential output between an output of the sensing circuit and an output of the reference circuit,
wherein the first signal source is configured to output a first frequency signal, and the second signal source is configured to output a second frequency signal having a frequency different from a frequency of the first frequency signal, thereby making a driving frequency for the sensing SAW element and a driving frequency for the reference SAW element different.

2. The sensor for detecting a substance in liquid according to Claim 1, wherein the first and second frequency signals are selected so as to satisfy dP ≥ 0, where dP=Pr-Ps, Ps is an output signal of the sensing circuit, Pr is an output signal of the reference circuit, and dP is an output signal of the differential circuit.

3. The sensor for detecting a substance in liquid according to Claim 1 or 2, wherein each of the piezoelectric substrates is a 30° to 40° rotated Y-plate X-propagation lithium tantalate (LiTaO₃) substrate.

4. The sensor for detecting a substance in liquid according to any one of Claims 1 to 3, wherein each of the sensing SAW element and the reference SAW element is a SAW element that uses surface acoustic waves composed principally of shear-horizontal (SH) waves.
